# EUROPEAN PATENT APPLICATION

(11) **EP 4 574 637 A1**
(43) Date of publication of application: **25.06.2025**
(21) Application number: 24210154.1
(22) Date of filing: 31.10.2024
(51) Int. Cl.: B62J 1/04, B62J 1/12, B62J 9/14, B62K 19/46

(54) **OPENING AND CLOSING MECHANISM OF A SEAT OF A STRADDLE TYPE VEHICLE**

(30) Priority: 20.12.2023 JP 2023214460
(71) Applicant: Suzuki Motor Corporation, Shizuoka 432-8611 (JP)
(72) Inventor: OKAJIMA, Hiroki, Shizuoka (JP); KATSURA, Hiroto, Shizuoka (JP)
(74) Representative: Haseltine Lake Kempner LLP

(57) **Abstract**

An opening and closing mechanism (50) for a seat (16). The opening and closing mechanism includes a base bracket (51, 55, 56), a seat bracket (61), a stopper bracket (81) swingably supported by the base bracket (51, 55, 56), and a repulsion member (86) configured to generate a repulsion force against swinging of the stopper bracket (81). The seat bracket (61) is swingably coupled to the base bracket (51, 55, 56). In a case where the seat bracket (61) swings in an opening direction, the repulsion force acts on the stopper bracket (81) to maintain an initial posture of the stopper bracket (81), and the stopper bracket (81) is pressed against the seat bracket (61). The seat bracket (61) is formed with a hook portion (68) to be hooked to the stopper bracket (81) in the initial posture in a case where the seat bracket (61) reaches an opening position.

## Description

### TECHNICAL FIELD

The present disclosure relates to an opening and closing mechanism for seat.

### BACKGROUND ART

As an opening and closing mechanism for a seat of a straddle-type vehicle, there is known a mechanism in which a lifting operation of a seat is assisted by a gas spring (for example, see JP2018-75971A). In an opening and closing mechanism for seat of JP2018-75971A, a movable bracket provided on a seat and a fixing bracket provided on a vehicle body frame are coupled to be openable and closable via a hinge. A gas spring is coupled to the movable bracket, and a repulsion force of the gas spring is applied to the movable bracket in an opening direction in a state where the seat is closed. The seat is opened only by an upward small force applied by a driver, and is held in an opened state by the repulsion force of the gas spring.

In the straddle-type vehicle of JP2018-75971A, the seat is held in a closed state by a lock mechanism, however, the repulsion force of the gas spring may also act on the lock mechanism and a release operation may become heavy.

### SUMMARY OF INVENTION

Aspect of non-limiting embodiments of the present disclosure relates to provide an opening and closing mechanism that is easy to operate with a simple configuration.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided an opening and closing mechanism for a seat coupled to a vehicle body of a straddle-type vehicle to be openable and closable, the opening and closing mechanism including:
a base bracket attached to the vehicle body;
a seat bracket attached to the seat;
a stopper bracket swingably supported by the base bracket; and
a repulsion member configured to generate a repulsion force against swinging of the stopper bracket,
in which the seat bracket is swingably coupled to the base bracket,
in a case where the seat bracket swings in an opening direction, the repulsion force of the repulsion member acts on the stopper bracket to maintain an initial posture of the stopper bracket, and the stopper bracket is pressed against the seat bracket, and
the seat bracket is formed with a hook portion to be hooked to the stopper bracket in the initial posture in a case where the seat bracket reaches an opening position.

According to an aspect of the present disclosure, there is provided an opening and closing mechanism for coupling a first member and a second member to be openable and closable, the opening and closing mechanism including:
a fixing bracket attached to the first member;
a movable bracket attached to the second member;
a stopper bracket swingably supported by the fixing bracket; and
a repulsion member configured to generate a repulsion force against swinging of the stopper bracket,
in which the movable bracket is swingably coupled to the fixing bracket,
in a case where the fixing bracket swings in an opening direction, the repulsion force of the repulsion member acts on the stopper bracket to maintain an initial posture of the stopper bracket, and the stopper bracket is pressed against the movable bracket, and
the movable bracket is formed with a hook portion to be hooked to the stopper bracket in the initial posture in a case where the movable bracket reaches an opening position.

### BRIEF DESCRIPTION OF DRAWINGS

Exemplary embodiment(s) of the present invention will be described in detail based on the following figures, wherein:
FIG. 1 is a left side view of a straddle-type vehicle according to an embodiment;
FIG. 2 is a left side view of a rear portion of a vehicle body according to the present embodiment;
FIG. 3 is a top view of the rear portion of the vehicle body according to the present embodiment;
FIG. 4 is a perspective view of an opening and closing mechanism for seat according to the present embodiment;
FIG. 5 is a side view of the opening and closing mechanism for seat according to the present embodiment;
FIG. 6 is a front view of the opening and closing mechanism for seat according to the present embodiment;
FIGS. 7A to 7C are transition views of a seat opening operation according to the present embodiment; and
FIGS. 8A to 8C are transition views of a seat swing restriction release operation and a seat closing operation according to the present embodiment.

### DESCRIPTION OF EMBODIMENTS

An opening and closing mechanism according to an aspect of the present disclosure couples a seat to a vehicle body of a straddle-type vehicle such that the seat is openable and closable. In the opening and closing mechanism for seat, a base bracket is attached to the vehicle body, a seat bracket is attached to the seat, and the seat bracket is swingably coupled to the base bracket as the seat is opened. A stopper bracket is swingably supported by the base bracket. A repulsion force against swinging of the stopper bracket is generated by a repulsion member. In a case where the seat bracket swings in an opening direction, the stopper bracket is maintained in an initial posture by the repulsion force of the repulsion member, and is pressed against the seat bracket. The seat bracket is formed with a hook portion configured to be hooked to the stopper bracket in the initial posture. In a case where the seat bracket reaches an opening position, the hook portion of the seat bracket is hooked to the stopper bracket in the initial posture, and the seat bracket is restricted from swinging in a closing direction so that the seat is held in a self-standing posture. This eliminates a need for an additional member such as a gas spring for holding the seat in the self-standing posture, and prevents a release operation of a lock mechanism from being heavy due to the additional member or the like.

### Embodiments

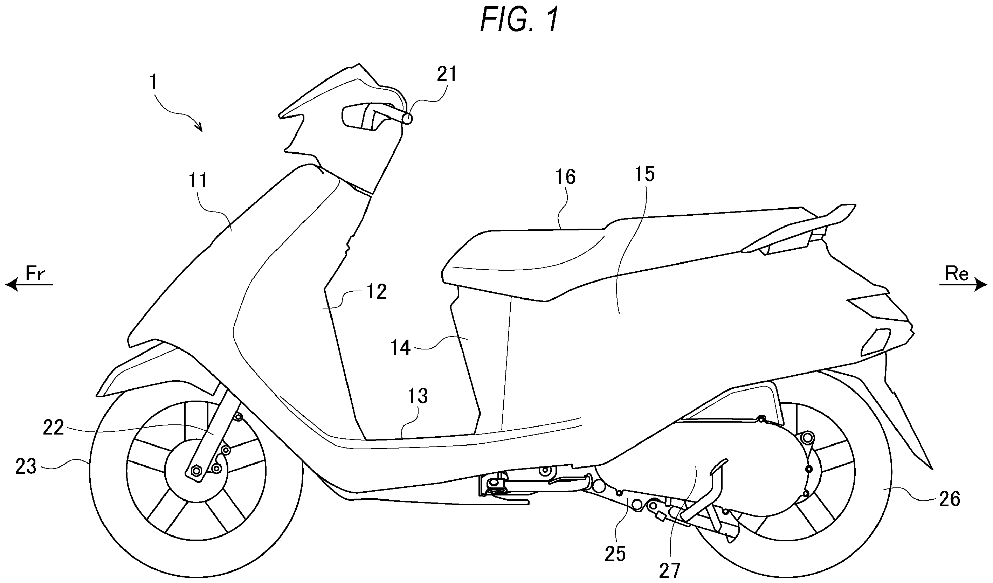

Hereinafter, a straddle-type vehicle according to an embodiment will be described with reference to the accompanying drawings. Fig. 1 is a left side view of the straddle-type vehicle according to the present embodiment. In the following drawings, an arrow Fr indicates a vehicle front side, an arrow Re indicates a vehicle rear side, an arrow L indicates a vehicle left side, and an arrow R indicates a vehicle right side.

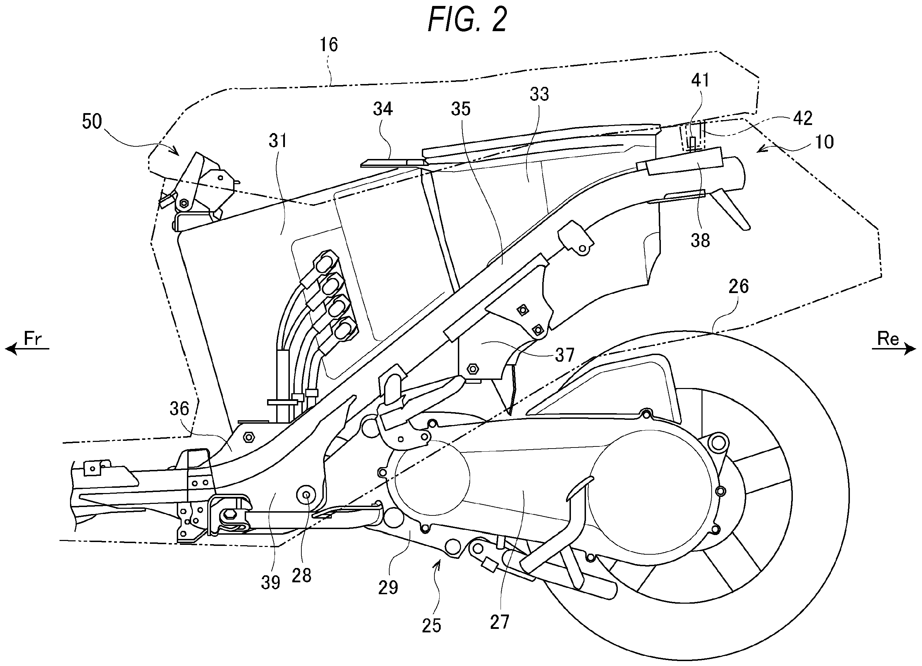

As shown in FIG. 1, a straddle-type vehicle 1 is equipped with various covers that are vehicle body exteriors on an underbone vehicle body frame 10 (see FIG. 2). The straddle-type vehicle 1 is provided with a front cover 11 on the vehicle front side, and a front leg shield 12, which protects feet of a rider, on a rear side of the front cover 11. From a lower end of the front leg shield 12, a floor board 13 extends rearward. The floor board 13 is provided with, on a rear side, a body cover 14 and a pair of side covers 15. On upper portions of the side covers 15, a seat 16 is installed, which combines seating surfaces for a driver and a passenger.

The front cover 11 is provided with a handle 21 on an upper side, and a front wheel 23, which is rotatably supported via a pair of front forks 22, on a lower side. The side covers 15 are provided with, on a lower side, a swing arm 25 with a motor. The swing arm 25 is swingably coupled to the vehicle body frame 10. A rear wheel 26 is rotatably supported on a rear portion of the swing arm 25. The swing arm 25 has a left side surface covered with a swing arm cover 27. Power is transmitted from the motor to the rear wheel 26 via a belt-type continuously variable transmission (not shown) inside the swing arm cover 27.

In this type of straddle-type vehicle, a seat is coupled to a vehicle body to be openable and closable. A scooter-type straddle-type vehicle generally adopts a structure in which the seat is not closed by its own weight when opened more than upright. Alternatively, there is also a type of straddle-type vehicle in which a seat opening degree is small and the seat is not closed by its own weight by a gas spring or the like. In this type of straddle-type vehicle, a repulsion force of a gas spring or the like acts on the seat even when the seat is closed. For this reason, even when the seat is held in a closed state by a lock mechanism, the repulsion force of the gas spring may also act on a lock mechanism and a release operation may become heavy.

Since the repulsion force acts on the seat in an opening direction, a gap is likely to be generated at a joint portion between the seat and a cover. Further, the seat may incline when the gas spring or the like is installed on only one of left and right sides and only one side of the seat is supported by the gas spring or the like. To prevent the gap at the joint portion and the inclination of the seat, it is necessary to increase rigidity of the seat itself, which makes the seat heavier. In the opening and closing mechanism for seat according to the present embodiment, a stopper that swings following opening and closing of the seat is provided, and swinging of the seat is restricted by the stopper so that the seat is not closed by its own weight when the seat is opened.

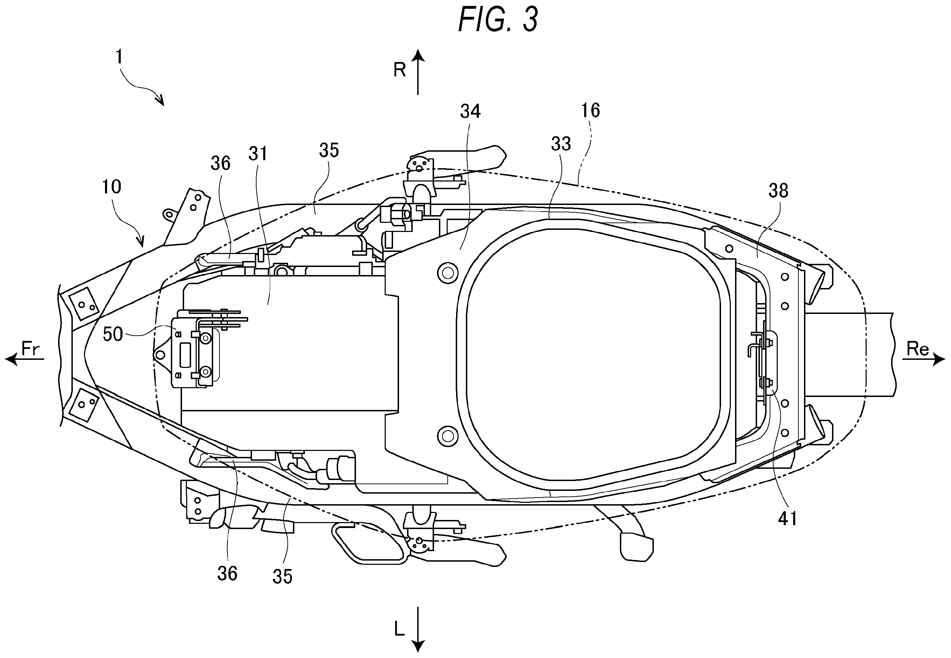

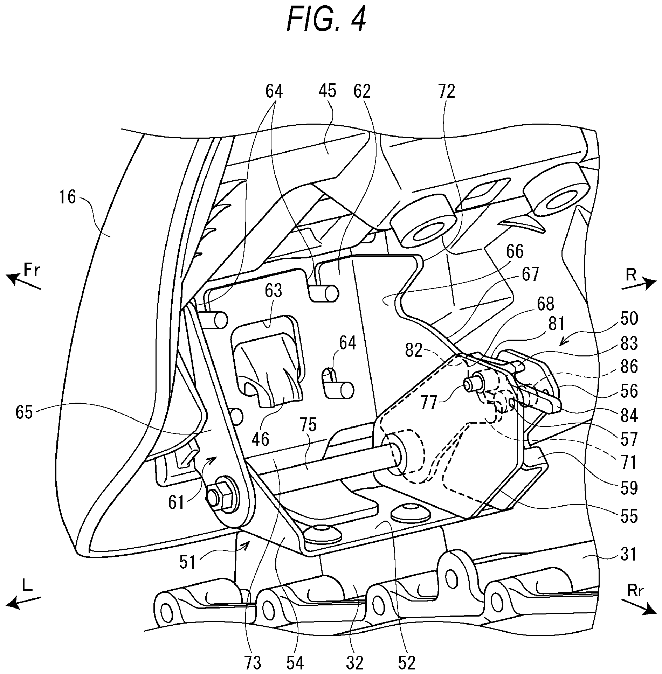

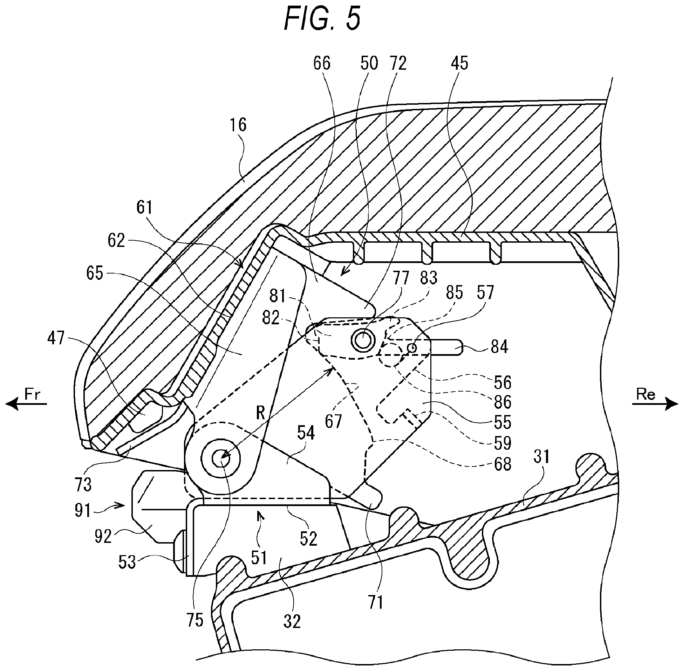

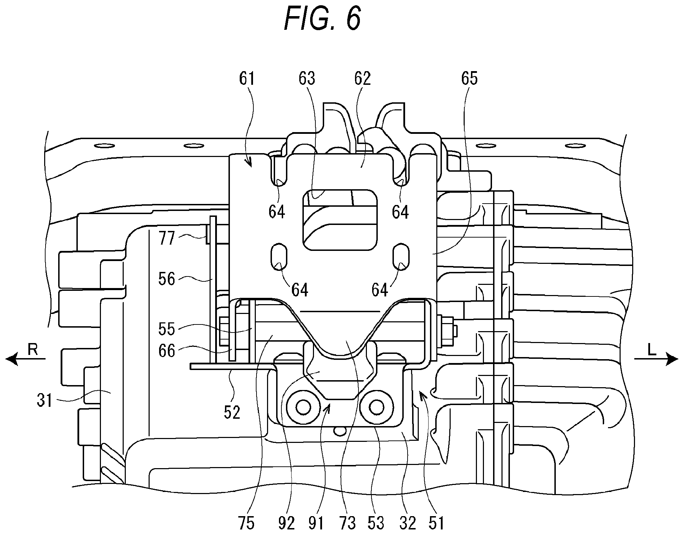

Hereinafter, a structure of a rear portion of the straddle-type vehicle will be described with reference to FIGS. 2 to 6. FIG. 2 is a left side view of a rear portion of a vehicle body according to the present embodiment. FIG. 3 is a top view of the rear portion of the vehicle body according to the present embodiment. FIG. 4 is a perspective view of the opening and closing mechanism for seat according to the present embodiment. FIG. 5 is a side view of the opening and closing mechanism for seat according to the present embodiment. FIG. 6 is a front view of the opening and closing mechanism for seat according to the present embodiment. In FIGS. 2 and 3, a seat, a cover, a floor board, and the like are indicated by two-dot chain lines. In FIG. 4, a second base bracket is indicated by a two-dot chain line.

As shown in FIGS. 2 and 3, a pair of side frames 35 extend obliquely upward from the front side to the rear side at the rear portion of the vehicle body of the straddle-type vehicle 1. On an inner side of the pair of side frames 35, a battery 31 and a storage box 33 are arranged side by side in a front-rear direction. The battery 31 has a battery case formed in a substantially rectangular shape in a side view, which stores a plurality of cells (unit cells) therein. In a side view, the battery 31 inclines forward such that a lower corner on a front side thereof is lowest, an upper corner on a rear side thereof is highest, an upper corner on the front side thereof is most forward, and a lower corner on the rear side thereof is most rearward.

A fixing bracket 36 protrudes upward from a vicinity of a rising edge of each of the pair of side frames 35 on a front side. A fixing bracket 37 protrudes downward from an intermediate position of each of the pair of side frames 35. A front end of a lower surface of the battery 31 is fixed to the fixing bracket 36 on the front side. A rear end of the lower surface of the battery 31 of the fixing bracket 37 on the rear side. The rear end of the lower surface of the battery 31 is fixed to the pair of side frames 35 in a position higher than the front end of the lower surface of the battery 31. The battery 31 is supported from below in a forward inclining posture by the pair of side frames 35. An opening and closing mechanism 50 of the seat 16 is attached to a front end of an upper surface of the battery 31.

The storage box 33 is provided with a flange 34 in a vicinity of an opening on an upper surface of the storage box 33. A lower surface of the storage box 33 inclines to avoid interference with the rear wheel 26. The flange 34 has a front side covering a rear side of the upper surface of the battery 31. The front side of the flange 34 is fixed to an upper corner on a rear side of the battery 31. The pair of side frames 35 are connected to a rear side of the storage box 33 by a bridge bracket 38. The bridge bracket 38 is provided with a seat lock 41. A seat striker 42 is provided at a rear end portion of the seat 16. The seat striker 42 is locked to the seat lock 41 in a state where the seat 16 is closed.

A fixing bracket 39 protrudes downward from the vicinity of the rising portion of each of the pair of side frames 35 on the front side. The swing arm 25 is swingably supported by the fixing bracket 39 via a pivot 28. The swing arm 25 has a base end portion serving as a motor case 29, in which a motor (not shown) is installed. The rear wheel 26 is supported on a rear end of the swing arm 25, and a rear suspension (not shown) is connected to the rear end of the swing arm 25. Since the motor is located closer to the pivot 28 of the swing arm 25, vibration transmitted to the motor when the swing arm 25 swings is reduced.

As shown in FIGS. 4 and 5, the opening and closing mechanism 50 of the seat 16 includes first to third base brackets 51, 55, and 56, a seat bracket 61, and a stopper bracket 81. The seat bracket 61 has a base end portion swingably coupled to base end portions of the first and second base brackets 51 and 55, via a seat rotating shaft (swing shaft) 75. The stopper bracket 81 is swingably supported on upper portions of the second and third base brackets 55 and 56, via a stopper rotating shaft 77. The second and third base brackets 55 and 56, the stopper bracket 81, and the seat bracket 61 on a right side of the vehicle body configures a return prevention structure of the seat 16.

A support portion 32 protrudes upward from a front side of the upper surface of the battery 31. The first base bracket 51 is attached to the support portion 32 of the battery 31. The first base bracket 51 has a lower plate 52 extending in a vehicle width direction along an upper surface of the support portion 32. The lower plate 52 is screwed to the upper surface of the support portion 32. To a front edge of the lower plate 52 of the first base bracket 51, a front plate 53 along a front surface of the support portion 32 is connected. The front plate 53 is screwed to the front surface of the support portion 32. A side plate 54 rises from one side edge (left side edge) of the lower plate 52 of the first base bracket 51.

The second and third base brackets 55 and 56 are attached to the other side edge side (right edge side) of the lower plate 52 of the first base bracket 51. The second and third base brackets 55 and 56 stand from the lower plate 52 of the first base bracket 51, and are parallel to the side plate 54 of the first base bracket 51. The second base bracket 55 faces the side plate 54 of the first base bracket 51 at a sufficient interval in the vehicle width direction. The third base bracket 56 faces the second base bracket 55 at a slight interval. The first to third base brackets 51, 55, and 56 may be integrally formed.

The seat bracket 61 is attached to a seat plate 45 on a lower surface of the seat 16. A hook 46 protrudes downward from a front side of the seat plate 45 on a lower surface. An opening 63 in a center of an upper plate 62 of the seat bracket 61 is hooked to the hook 46. The opening 63 of the upper plate 62 is provided with four elongated holes 64 in a vicinity thereof. The seat bracket 61 is screwed to the seat plate 45 through the elongated holes 64. A pair of side plates 65 and 66 are connected to corresponding two side edges of the upper plate 62 of the seat bracket 61, and overlap the side plate 54 of the first base bracket 51 and the second base bracket 55 from an outer side in the vehicle width direction.

An overlapping portion between the side plate 54 of the first base bracket 51 and the side plate 65 of the seat bracket 61 and an overlapping portion between the second base bracket 55 and the side plate 66 of the seat bracket 61 are coupled via the seat rotating shaft 75. The right side plate 66 of the seat bracket 61 is inserted between the second and third base brackets 55 and 56. The side plate 66 has a curved edge 67 having a radius R about the seat rotating shaft 75, and a portion of the curved edge 67 protrudes radially outward to form a hook portion 68. The side plate 66 is formed with a push-up piece (push-up portion) 71 on a side of a closing direction relative to the curved edge 67, and a push-down piece (push-down portion) 72 on a side of an opening direction relative to the curved edge 67. The opening direction is a direction in which the seat 16 swings to be opened. The closing direction is a direction in which the seat 16 swings to be closed.

In a case where the push-up piece 71 is brought close to the stopper bracket 81 as the seat 16 swings in the opening direction, the push-down piece 72 is separated from the stopper bracket 81. In a case where the push-down piece 72 is brought close to the stopper bracket 81 as the seat 16 swings in the closing direction, the push-up piece 71 is separated from the stopper bracket 81. As details will be described later, the stopper bracket 81 is pushed up by the push-up piece 71 when the seat 16 is widely opened, and is pushed down by the push-down piece 72 immediately before the seat 16 is closed. A restricting piece (restricting portion) 73 extends forward from a front edge of the upper plate 62 of the seat bracket 61.

The stopper bracket 81 is inserted between the second and third base brackets 55 and 56, and is supported by the second and third base brackets 55 and 56 via the stopper rotating shaft 77. The stopper bracket 81 is formed with, at a front end portion, an uneven abutment portion 82 that abuts against the side plate 66 of the seat bracket 61. The stopper bracket 81 has a rear half part bifurcated into an upper short piece 83 and a lower long piece 84. The long piece 84 largely protrudes rearward from the stopper bracket 81, and may abut against a swinging stop claw piece 59 formed on the third base bracket 56.

Each of the second and third base brackets 55 and 56 is formed with a hook hole 57. A hook hole of the third base bracket 56 is not shown. A recess 85 is formed between the short piece 83 and the long piece 84 of the stopper bracket 81. Two ends of a double torsion spring (repulsion member) 86 are hooked in the hook holes 57 of the second and third base brackets 55 and 56. An intermediate portion of the double torsion spring 86 is hooked in the recess 85 of the stopper bracket 81. The double torsion spring 86 generates a repulsion force against swinging of the stopper bracket 81, so that the stopper bracket 81 is maintained in a prescribed posture by the repulsion force of the double torsion spring 86.

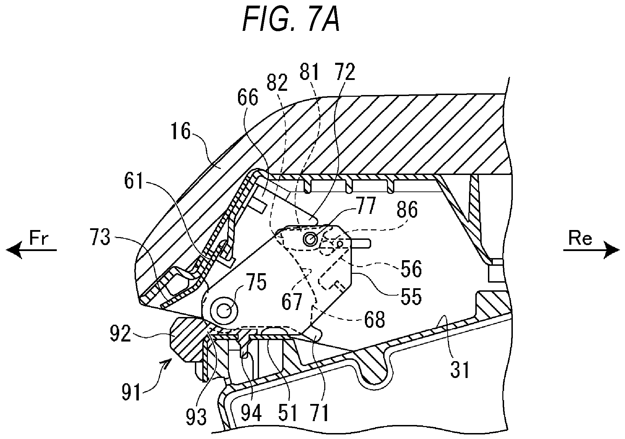

As shown in FIGS. 5 and 6, a cushion material 91 made of rubber is attached to the first base bracket 51. The front plate 53 and the lower plate 52 of the first base bracket 51 configures a front surface and an upper surface of an installation surface for the cushion material 91. The cushion material 91 includes a body part 92 in contact with the front plate 53 of the first base bracket 51. An extension part 93 (see FIG. 7A) extending rearward from the body part 92 of the cushion material 91 is in contact with the lower plate 52 of the first base bracket 51. The body part 92 of the cushion material 91 is not fixed to the front plate 53, and a fixing protrusion 94 (see FIG. 7A) protruding downward from the extension part 93 of the cushion material 91 is fixed to a fixing hole of the lower plate 52.

The seat rotating shaft 75 is located on a front end side of the seat 16. The body part 92 of the cushion material 91 is located forward of the seat rotating shaft 75. The seat bracket 61 is formed with the restricting piece 73 configured to come into contact with and separate from the cushion material 91. In a case where the seat bracket 61 swings in the opening direction, the restricting piece 73 comes into contact with the cushion material 91. Since the restricting piece 73 comes into contact with the cushion material 91, momentum of the seat 16 in the opening direction is absorbed by the cushion material 91, and operability is improved. By providing the cushion material 91 in a vicinity of the seat rotating shaft 75, the cushion material 91 can have a reduced size, and a highly elastic material can be used for the cushion material 91.

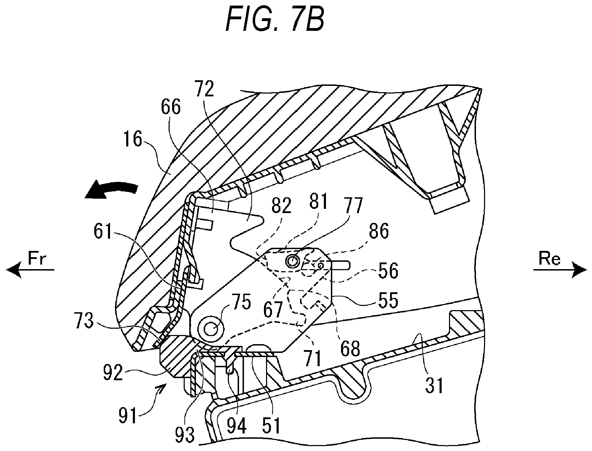

At this time, the seat bracket 61 is swung in the opening direction, and the restricting piece 73 starts to come into contact with the cushion material 91 before the seat bracket 61 reaches an opening position in which the seat 16 is held in a self-standing posture (see FIG. 7B). In a case where the restricting piece 73 starts to come into contact with the cushion material 91, the seat rotating shaft 75 is pressed against an inner edge of a shaft hole by a reaction force of the cushion material 91, thereby preventing rattling. When the cushion material 91 is crushed, the seat bracket 61 is easily stopped in the opening position due to a resistance feeling. The restricting piece 73 is narrower than the cushion material 91 and tapered, and is easy to bite into the cushion material 91, thereby reducing left-right rattling of the seat bracket 61.

As described above, the body part 92 of the cushion material 91 is not fixed to the front plate 53 of the first base bracket 51. For this reason, when the cushion material 91 is crushed by the restricting piece 73, the cushion material 91 is deformed downward to reduce unnecessary stress, thereby improving durability. A contact surface of the body part 92 of the cushion material 91 with which the restricting piece 73 comes into contact inclines forward and obliquely downward. The restricting piece 73 inclines forward and obliquely downward in a position in which the restricting piece 73 starts to come into contact with the cushion material 91 (see FIG. 7B). Since the contact surface between the cushion material 91 and the restricting piece 73 is oriented obliquely downward, the cushion material 91 is easy to deform downward smoothly.

A reinforcing portion 47 protrudes downward from the seat plate 45 of the seat 16, and is located on a back side of the restricting piece 73 of the seat bracket 61. Even in a case where the seat bracket 61 (seat 16) receives an excessive input in the opening direction and a large reaction force is applied to the restricting piece 73 from the cushion material 91, the restricting piece 73 is supported from the back side by the reinforcing portion 47 and prevented from deformation. An inclination angle of the restricting piece 73 relative to the seat bracket 61 and a thickness of the body part 92 of the cushion material 91 are appropriately set according to a crush amount of the body part 92, the opening position (angle) of the seat bracket 61, and the like.

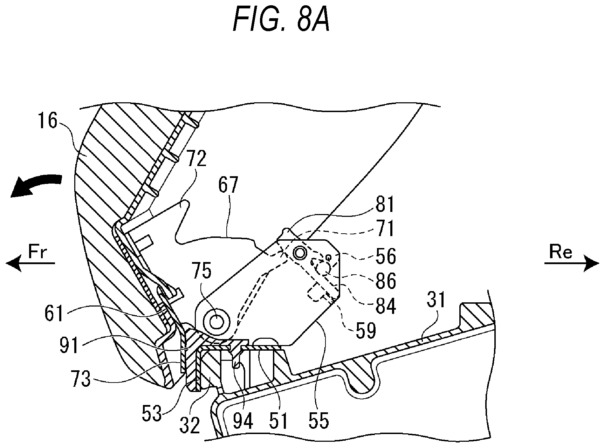

Opening and closing operations of the seat will be described with reference to FIGS. 7A to 8C. FIGS. 7A to 7C are transition views of the seat opening operation according to the present embodiment. FIGS. 8A to 8C are transition views of a seat swing restriction release operation and the seat closing operation according to the present embodiment.

As shown in FIG. 7A, in a case where the seat 16 is in a closed and reclined posture, the stopper bracket 81 is supported in an initial posture by the second and third base brackets 55 and 56 via the stopper rotating shaft 77. In the initial posture of the stopper bracket 81, a longitudinal direction of the stopper bracket 81 is oriented in a substantially horizontal direction. The side plate 66 of the seat bracket 61 is deeply inserted between the second and third base brackets 55 and 56, and the stopper bracket 81 is located directly below the push-down piece 72 of the seat bracket 61. The abutment portion 82 of the stopper bracket 81 on the front end side is in contact with the curved edge 67 of the seat bracket 61.

As shown in FIG. 7B, in a case where the seat 16 is lifted from the reclined posture, the seat bracket 61 swings in the opening direction relative to the first and second base brackets 51 and 55. In a case where the seat bracket 61 swings in the opening direction, the repulsion force of the double torsion spring 86 acts on the stopper bracket 81 to maintain the initial posture of the stopper bracket 81. The repulsion force of the double torsion spring 86 presses the abutment portion 82 of the stopper bracket 81 against the curved edge 67 of the seat bracket 61, and the abutment portion 82 of the stopper bracket 81 moves along the curved edge 67. The restricting piece 73 of the seat bracket 61 starts to come into contact with the cushion material 91.

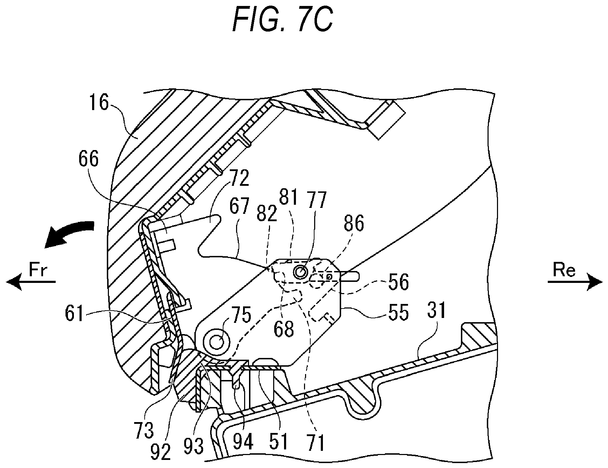

As shown in FIG. 7C, in a case where the seat 16 is further lifted, the seat bracket 61 swings toward the opening position. In a case where the seat bracket 61 reaches the opening position, the abutment portion 82 of the stopper bracket 81 rides over the hook portion 68 protruding from the curved edge 67 of the seat bracket 61. In a case where riding over the hook portion 68, the abutment portion 82 of the stopper bracket 81 abuts against the curved edge 67 and generates a striking sound, so that an operator can be made aware that the seat 16 is completely opened. Thereafter, the abutment portion 82 of the stopper bracket 81 in the initial posture is hooked to the hook portion 68 of the seat bracket 61, and the seat 16 is held in the self-standing posture.

Further, the cushion material 91 is crushed by the restricting piece 73 of the seat bracket 61, and an appropriate resistance feeling is given to the seat 16 by an elastic force of the cushion material 91. Since the restricting piece 73 bites into the cushion material 91, rattling of the seat rotating shaft 75 and the seat bracket 61 is prevented by the cushion material 91. Further, since the body part 92 of the cushion material 91 is not fixed to the first base bracket 51, the cushion material 91 is deformed downward while being crushed by the restricting piece 73. Accordingly, unnecessary stress on the cushion material 91 is reduced, and durability is improved.

As shown in FIG. 8A, in a case where the seat 16 is to be closed from the self-standing posture, the seat bracket 61 is once moved slightly in the opening direction relative to the first and second base brackets 51 and 55 about the seat rotating shaft 75. In a case where the seat bracket 61 is swung in the opening direction beyond the opening position to a limit, a front end side of the stopper bracket 81 is pushed up by the push-up piece 71 of the seat bracket 61. In this manner, in a case where the seat 16 is further opened from the self-standing posture, the stopper bracket 81 is pushed up by the push-up piece 71 of the seat bracket 61, and the hooking of the seat bracket 61 is released.

Further, the long piece 84 of the stopper bracket 81 abuts against the claw piece 59 of the third base bracket 56, and the stopper bracket 81 is swung from the initial posture to a release posture. In a case where the stopper bracket 81 takes the release posture, the repulsion force of the double torsion spring 86 acts on the stopper bracket 81 to maintain the release posture of the stopper bracket 81. Since the stopper bracket 81 is maintained in the release posture, the stopper bracket 81 is prevented from returning to the initial posture and being hooked again. In a case where the seat bracket 61 is swung to a limit, the restricting piece 73 is parallel to the front plate 53 of the first base bracket 51.

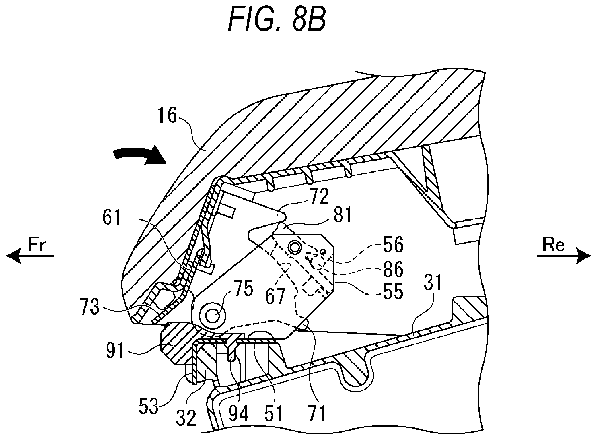

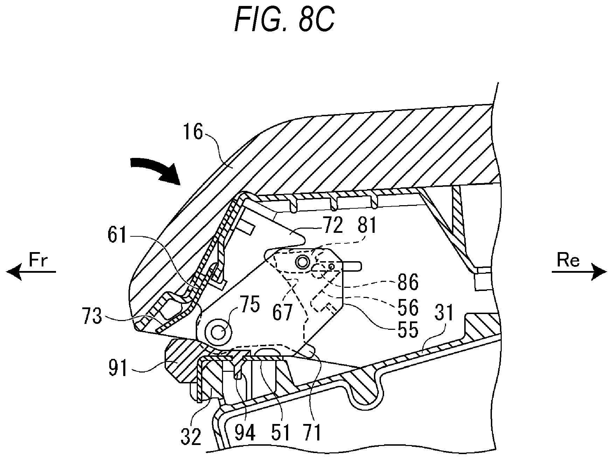

As shown in FIG. 8B, in a case where the seat bracket 61 is closed from the self-standing posture, the seat bracket 61 swings in the closing direction relative to the first and second base brackets 51 and 55. Before the seat bracket 61 is fully closed, that is, before the seat striker 42 (see FIG. 2) is locked to the seat lock 41 (see FIG. 2), the stopper bracket 81 in the release posture is pushed down by the push-down piece 72. Thereafter, as shown in FIG. 8C, the stopper bracket 81 is swung from the release posture to the initial posture. Before the seat 16 is completely closed, the seat 16 can be opened again by returning the stopper bracket 81 to the initial posture.

According to the opening and closing mechanism 50 for the seat 16 according to the present embodiment as described above, when the seat 16 is opened, the seat bracket 61 is swung in the opening direction relative to the first and second base brackets 51 and 55. When the seat bracket 61 swings in the opening direction, the stopper bracket 81 is maintained in the initial posture by the repulsion force of the double torsion spring 86, and the stopper bracket 81 is pressed against the seat bracket 61. When the seat bracket 61 reaches the opening position, the hook portion 68 of the seat bracket 61 is hooked to the stopper bracket 81 in the initial posture, the swinging of the seat bracket 61 in the closing direction is restricted, and the seat 16 is held in the self-standing posture. This eliminates a need for an additional member such as a gas spring for holding the seat 16 in the self-standing posture, and prevents a release operation of a lock mechanism from being heavy due to the additional member or the like.

In the present embodiment, the double torsion spring is exemplified as a repulsion member. Alternatively, the repulsion member is not particularly limited as long as it is a member that generates a repulsion force against the swinging of the stopper bracket.

In the present embodiment, a portion of the curved edge of the seat bracket protrudes radially to form the hook portion. Alternatively, the hook portion may be formed such that the stopper bracket in the initial posture can be hooked. For example, a portion of the curved edge of the seat bracket may be recessed radially inward to form a hook portion.

In the present embodiment, the contact surface between the restricting piece and the cushion material inclines forward and obliquely downward when the restricting piece is in contact with the cushion material. Alternatively, at least one contact surface of the restricting piece and the cushion material may incline forward and obliquely downward.

Although the base bracket is attached to the battery in the present embodiment, the base bracket may be attached to the vehicle body. For example, the base bracket may be attached to the vehicle body frame.

The present embodiment describes an opening and closing mechanism for a seat that is coupled to a vehicle body of a straddle-type vehicle to be openable and closable. Alternatively, the opening and closing mechanism according to the present embodiment can be used for other than a seat. For example, an opening and closing mechanism by which a first member and a second member are coupled to be openable and closable may be used. In this case, the opening and closing mechanism includes a fixing bracket attached to the first member, a movable bracket attached to the second member, a stopper bracket swingably supported by the fixing bracket, and a repulsion member that generates a repulsion force against swinging of the stopper bracket. The movable bracket is swingably coupled to the fixing bracket. When the movable bracket swings in the opening direction, a repulsion force of the repulsion member acts on the stopper bracket to maintain an initial posture of the stopper bracket, and the stopper bracket is pressed against the movable bracket. The movable bracket is formed with a hook portion that is hooked to the stopper bracket in the initial posture when the movable bracket reaches the opening position.

An opening and closing device for seat according to the present embodiment is not limited to the above-described straddle-type vehicle, and can be applied to other vehicles such as an all-terrain vehicle (ATV) and a water bike. The straddle-type vehicle is not limited to a general vehicle in which a driver rides on a seat in a posture of straddling the seat, and includes a scooter-type vehicle in which the driver rides on the seat without straddling the seat.

As described above, a first aspect provides an opening and closing mechanism (50) for a seat (16) coupled to a vehicle body (battery 31) of a straddle-type vehicle (1) to be openable and closable, the opening and closing mechanism including: a base bracket (first to third base brackets 51, 55, 56) configured to be attached to the vehicle body; a seat bracket (61) configured to be attached to the seat; a stopper bracket (81) swingably supported by the base bracket; and a repulsion member (double torsion spring 86) configured to generate a repulsion force against swinging of the stopper bracket, wherein the seat bracket is swingably coupled to the base bracket, when the seat bracket swings in an opening direction, the repulsion force of the repulsion member acts on the stopper bracket to maintain an initial posture of the stopper bracket, and the stopper bracket is pressed against the seat bracket, and the seat bracket is formed with a hook portion (68) to be hooked to the stopper bracket in the initial posture when the seat bracket reaches an opening position. According to this configuration, when the seat is opened, the seat bracket is swung in the opening direction relative to the base bracket. When the seat bracket swings in the opening direction, the stopper bracket is maintained in the initial posture by the repulsion force of the repulsion member, and is pressed against the seat bracket. When the seat bracket reaches the opening position, the hook portion of the seat bracket is hooked to the stopper bracket in the initial posture, and the seat bracket is restricted from swinging in a closing direction so that the seat is held in a self-standing posture. This eliminates a need for an additional member such as a gas spring for holding the seat in the self-standing posture, and prevents a release operation of a lock mechanism from being heavy due to the additional member or the like.

According to a second aspect, in the opening and closing mechanism according to the first aspect, the seat bracket is formed with a push-up portion (push-up piece 71) that pushes up the stopper bracket when the seat bracket swings in the opening direction beyond the opening position, the stopper bracket is swung from the initial posture to a release posture by the push-up portion, and the repulsion force of the repulsion member acts on the stopper bracket to maintain the release posture of the stopper bracket. According to this configuration, when the seat is further opened from the self-standing posture, the stopper bracket is pushed up by the push-up portion of the seat bracket, and the hooking of the seat bracket is released. Since the stopper bracket is maintained in the release posture by the repulsion force of the repulsion member, the stopper bracket is prevented from returning to the initial posture and being hooked again.

According to a third aspect, in the opening and closing mechanism according to the first or second aspect, the seat bracket is formed with a push-down portion (push-down piece 72) that pushes down the stopper bracket in a release posture when the seat bracket swings in a closing direction, and the stopper bracket is swung from the release posture to the initial posture by the push-down portion. According to this configuration, the stopper bracket can be returned from the release posture to the initial posture by closing the seat.

According to a fourth aspect, in the opening and closing mechanism according to the third aspect, the stopper bracket is swung from the release posture to the initial posture by the push-down portion before the seat bracket is fully closed. According to this configuration, before the seat is completely closed, the seat can be opened again by returning the stopper bracket to the initial posture.

According to a fifth aspect, the opening and closing mechanism according to any one of the first to fourth aspects further includes: a cushion material (cushion material 91) provided forward of a swing shaft (seat rotating shaft 75) of the seat bracket, wherein the swing shaft of the seat bracket is located on a front end side of the seat, and the seat bracket is provided with a restricting portion that comes into contact with the cushion material when the seat bracket swings in the opening direction. According to this configuration, momentum of the seat in the opening direction is absorbed by the cushion material, and operability is improved. By providing the cushion material in a vicinity of the swing shaft of the seat bracket, the cushion material can have a reduced size, and a highly elastic material can be used for the cushion material.

According to a sixth aspect, in the opening and closing mechanism according to the fifth aspect, the restricting portion (restricting piece 73) starts to come into contact with the cushion material before the seat bracket reaches the opening position. According to this configuration, the seat rotating shaft is pressed against an inner edge of a shaft hole by a reaction force of the cushion material, thereby preventing rattling. The seat bracket is easily stopped in the opening position due to a resistance feeling of the cushion material.

According to a seventh aspect, in the opening and closing mechanism according to the fifth or sixth aspect, the restricting portion is tapered. According to this configuration, the restricting portion is easy to bite into the cushion material, and the lateral rattling of the seat bracket is reduced.

According to an eighth aspect, in the opening and closing mechanism according to any one of the fifth to seventh aspects, an installation surface for the cushion material includes a front surface and an upper surface, a body part (92) of the cushion material is in contact with the front surface, and an extension part (93) extending rearward from the body part is fixed to the upper surface. According to this configuration, since the cushion material is not fixed to the front surface, when the cushion material is crushed by the restricting portion, the cushion material is deformed downward to reduce unnecessary stress, and thereby durability can be improved.

According to a ninth aspect, in the opening and closing mechanism according to the eighth aspect, a contact surface of the body part of the cushion material with which the restricting portion comes into contact inclines forward and obliquely downward. According to this configuration, the cushion material can be smoothly deformed downward.

According to a tenth aspect, in the opening and closing mechanism according to the eighth or ninth aspect, the restricting portion inclines forward and obliquely downward in a position in which the restricting portion starts to come into contact with the cushion material. According to this configuration, the cushion material can be smoothly deformed downward.

According to an eleventh aspect, in the opening and closing mechanism according to any one of the fifth to tenth aspects, the seat is formed with a reinforcing portion (47) on a back side of the restricting portion. According to this configuration, the restricting portion can be prevented from deformation even when the seat bracket receives an excessive input in the opening direction.

A twelfth aspect provides an opening and closing mechanism for coupling a first member and a second member to be openable and closable, the opening and closing mechanism including: a fixing bracket configured to be attached to the first member; a movable bracket configured to be attached to the second member; a stopper bracket swingably supported by the fixing bracket; and a repulsion member configured to generate a repulsion force against swinging of the stopper bracket, wherein the movable bracket is swingably coupled to the fixing bracket, when the fixing bracket swings in an opening direction, the repulsion force of the repulsion member acts on the stopper bracket to maintain an initial posture of the stopper bracket, and the stopper bracket is pressed against the movable bracket, and the movable bracket is formed with a hook portion to be hooked to the stopper bracket in the initial posture when the movable bracket reaches an opening position. According to this configuration, when the second member is opened, the movable bracket is swung in the opening direction relative to the fixing bracket. When the movable bracket swings in the opening direction, the stopper bracket is maintained in the initial posture by the repulsion force of the repulsion member, and is pressed against the movable bracket. When the movable bracket reaches the opening position, the hook portion of the movable bracket is hooked to the stopper bracket in the initial posture, and the movable bracket is restricted from swinging in a closing direction so that the second member is held in a self-standing posture. This eliminates a need for an additional member such as a gas spring for holding the second member in the self-standing posture, and prevents a release operation of a lock mechanism from being heavy due to the additional member or the like.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An opening and closing mechanism (50) for a seat (16) coupled to a vehicle body (31) of a straddle-type vehicle (1) to be openable and closable, the opening and closing mechanism comprising:
a base bracket (51, 55, 56) attached to the vehicle body (31);
a seat bracket (61) attached to the seat (16);
a stopper bracket (81) swingably supported by the base bracket (51, 55, 56); and
a repulsion member (86) configured to generate a repulsion force against swinging of the stopper bracket (81),
wherein the seat bracket (61) is swingably coupled to the base bracket (51, 55, 56),
in a case where the seat bracket (61) swings in an opening direction, the repulsion force of the repulsion member (86) acts on the stopper bracket (81) to maintain an initial posture of the stopper bracket (81), and the stopper bracket (81) is pressed against the seat bracket (61), and
the seat bracket (61) is formed with a hook portion (68) to be hooked to the stopper bracket (81) in the initial posture in a case where the seat bracket (61) reaches an opening position.

2. The opening and closing mechanism (50) according to claim 1,
wherein the seat bracket (61) is formed with a push-up portion (71) configured to push up the stopper bracket (81) in a case where the seat bracket (61) swings in the opening direction beyond the opening position,
the stopper bracket (81) is swung from the initial posture to a release posture by the push-up portion (71), and
the repulsion force of the repulsion member (86) acts on the stopper bracket (81) to maintain the release posture of the stopper bracket (81).

3. The opening and closing mechanism (50) according to claim 1 or 2,
wherein the seat bracket (61) is formed with a push-down portion (72) configured to push down the stopper bracket (81) in a release posture in a case where the seat bracket (61) swings in a closing direction, and
the stopper bracket (81) is swung from the release posture to the initial posture by the push-down portion (72).

4. The opening and closing mechanism (50) according to claim 3,
wherein the stopper bracket (81) is swung from the release posture to the initial posture by the push-down portion (72), before the seat bracket (61) is fully closed.

5. The opening and closing mechanism (50) according to claim 1 or 2, further comprising:
a cushion material (91) provided forward of a swing shaft (75) of the seat bracket (61),
wherein the swing shaft (75) of the seat bracket (61) is located on a front end side of the seat (16), and
the seat bracket (61) is provided with a restricting portion (73) configured to come into contact with the cushion material (91) in a case where the seat bracket (61) swings in the opening direction.

6. The opening and closing mechanism according to claim 5,
wherein the restricting portion (73) starts to come into contact with the cushion material (91), before the seat bracket (61) reaches the opening position.

7. The opening and closing mechanism according to claim 5,
wherein the restricting portion (73) is tapered.

8. The opening and closing mechanism according to claim 5,
wherein an installation surface for the cushion material includes a front surface and an upper surface,
a body part (92) of the cushion material (91) is in contact with the front surface, and
an extension part (93) extending rearward from the body part (92) of the cushion material (91) is fixed to the upper surface.

9. The opening and closing mechanism according to claim 8,
wherein a contact surface of the body part (92) of the cushion material (91) with which the restricting portion (73) comes into contact inclines forward and obliquely downward.

10. The opening and closing mechanism according to claim 8,
wherein the restricting portion (73) inclines forward and obliquely downward, in a position in which the restricting portion (73) starts to come into contact with the cushion material (91).

11. The opening and closing mechanism according to claim 5,
wherein the seat (16) is formed with a reinforcing portion (47) on a back side of the restricting portion (73).

12. An opening and closing mechanism for coupling a first member and a second member to be openable and closable, the opening and closing mechanism comprising:
a fixing bracket attached to the first member;
a movable bracket attached to the second member;
a stopper bracket swingably supported by the fixing bracket; and
a repulsion member configured to generate a repulsion force against swinging of the stopper bracket,
wherein the movable bracket is swingably coupled to the fixing bracket,
in a case where the fixing bracket swings in an opening direction, the repulsion force of the repulsion member acts on the stopper bracket to maintain an initial posture of the stopper bracket, and the stopper bracket is pressed against the movable bracket, and
the movable bracket is formed with a hook portion to be hooked to the stopper bracket in the initial posture in a case where the movable bracket reaches an opening position.
